# EUROPÄISCHE PATENTSCHRIFT

(11) **EP 4 306 199 B1**
(45) Veröffentlichungstag und Bekanntmachung des Hinweises auf die Patenterteilung: **29.01.2025**
(21) Anmeldenummer: 23184827.6
(22) Anmeldetag: 11.07.2023
(51) Int. Cl.: B01D 46/00, B01D 46/121

(54) **FILTER MIT V-FÖRMIG ANGEORDNETEN FILTERMEDIENPAKETEN UND STRÖMUNGSOPTIMIERTER FORMGEBUNG**
FILTER WITH V-SHAPED FILTER MEDIA PACKS AND FLOW-OPTIMISED SHAPING
FILTRE COMPRENANT DES PAQUETS DE MILIEU FILTRANT AGENCÉS EN V ET UNE MISE EN FORME OPTIMISÉE EN ÉCOULEMENT

(30) Priorität: 14.07.2022 DE 102022117648
(43) Veröffentlichungstag der Anmeldung: 17.01.2024
(73) Patentinhaber: Carl Freudenberg KG, 69469 Weinheim (DE)
(72) Erfinder: Schumacher, Sascha, 69483 Wald-Michelbach (DE); Weber, Patrick, 69469 Weinheim (DE); Schroth, Thomas, 67240 Bobenheim-Roxheim (DE); Tapper, Renate, 64625 Bensheim (DE)

(56) Entgegenhaltungen:
- EP-A1- 2 895 250
- WO-A1-2012/164084
- WO-A1-2014/111162
- WO-A1-2021/001470
- US-A1- 2017 050 136

## Beschreibung

Die Erfindung betrifft einen Kassettenfilter mit einer Mehrzahl von Filtermedienpaketen, wobei je zwei Filtermedienpakete paarweise v-förmig angeordnet sind und mit einem Rahmen zur Aufnahme der Filtermedienpakete, wobei der Rahmen eine anströmseitige Kopfplatte, eine abströmseitige Fußplatte und zwei Seitenplatten besitzt.

### Stand der Technik

In Gasturbinen, Kompressoren, Klima- und Lüftungsanlagen kommen unterschiedlichste Filter zur Reinigung von Zuluftströmen zum Einsatz, z.B. Kassettenfilter.

Aus der EP 3 831 461 A1 ist ein derartiger Kassettenfilter mit einer Mehrzahl von Filtermedienpaketen bekannt, wobei je zwei Filtermedienpakete v-förmig angeordnet sind und die Filtermedienpakete von einem Gas zu dessen Reinigung von einer Rohgasseite des Filters zu einer Reingasseite des Filters durchströmt werden. Solche Filter werden auch als V-Zellen-Filter bzw. im Englischen als V-Bank-Filter bezeichnet. Der Filter besitzt einen Rahmen zur Aufnahme der Filtermedienpakete mit Schutzgittern für das Filtermedium.

Einen Filter mit einem ähnlichen Aufbau zeigt die US 2014 096493 A1. Auch aus der WO 2014 11162 A1 und der WO 2021 001470 A1 gehen ähnliche Filter hervor.

Solche Filter können schubladenartig in ein rechteckiges Schubfach einer Filteraufnahme eingeschoben werden. Mit Auflageflächen der Kopfplatte bzw. des Kopfrahmens liegt der Filter dann an der Filteraufnahme an und kann mit dieser verbunden werden, z.B. durch Verschrauben. Üblich ist, dass eine Filteraufnahme eine Mehrzahl von Fächern aufweist, um eine entsprechende Mehrzahl von Filtern aufnehmen zu können, welche dann matrixartig angeordnet sind und eine sogenannte Filterwand bilden. Auf die Bauteile des Filters wirkende Kräfte werden über die Kopfplatte bzw. den Kopfrahmen in die Filteraufnahme mit den Schubfächern und einer Trägerkonstruktion abgeleitet.

Der in Durchströmungsrichtung hinter der Trägerkonstruktion liegende Raum wird durch die teilweise flächig geschlossenen Seitenplatten der Filter mit ihren geschlossenen Seitenflächen abgeschattet. In der US 2014 096493 A1 sind die Seitenflächen beispielsweise über die halbe Tiefe des Filters geschlossen. Nur in der hinteren Hälfte des Filters bestehen Zwischenräume. Nachteilig bei diesen bekannten Filtern ist, dass diese Abschattung die Ausnutzung des vollen reingasseitigen Querschnittspotentials verhindert, somit nicht durchströmte Totbereiche erzeugt werden und die Strömung im Wesentlichen nur im Bereich der Fußplatte aus dem Filterelement austritt. Diese Einschränkung der Strömung bewirkt eine erhöhte Strömungsgeschwindigkeit in Bereichen des Filters, welche zu stärkeren Luftverwirbelungen und somit einem erhöhten Strömungswiderstand des Filters führt.

Auch kann es zu einer ungleichen Strömungsverteilung innerhalb der v-förmig angeordneten Filtermedienpakete kommen, wenn der Rahmen des Filters auf der Rohgasseite sowie auf der Reingasseite eine strömungsungünstige Geometrie aufweist. Besonders die aus dem Stand der Technik bekannten kantigen Ausgestaltungen von Traversen der Kopfplatte und der Fußplatte werden als strömungsungünstig erachtet.

Die US 2017/0050136 A1 offenbart einen Filter der sowohl auf der Einlassseite als auch auf der Auslassseite strömungsoptimierte Leitelemente vorsieht.

Eine möglichst gleichmäßige Verteilung der Durchströmungsgeschwindigkeit am Filtermedium ist jedoch von Vorteil für eine gleichmäßige Beladung des Filtermediums mit herausgefilterten Partikeln, was eine längere Nutzungsdauer des Filters erlaubt, bevor ein Austausch erforderlich wird.

### Aufgabenstellung

Aufgabe der vorliegenden Erfindung ist es einen strömungsoptimierten Filter zu schaffen, welcher einen geringen Strömungswiderstand und eine möglichst gleichmäßige Durchströmung der Filtermedienpakte aufweist und die Ausbildung von Luftverwirbelungen reduziert. Weitere Aufgabe ist es, einen strömungsoptimierten Filter zu schaffen, welcher gut in einer Filterwand verwendet werden kann.

### Technische Lösung

Gelöst wird diese Aufgabe durch einen Kassettenfilter wie er nachfolgend beschrieben und beansprucht ist.

Erfindungsgemäß wurde als vorteilhaft erkannt die Kopfplatte und/oder die Fußplatte und/oder die Seitenplatten mit einer strömungsoptimierten Formgebung zu versehen.

Die Erfindung betrifft einen Kassettenfilter mit einer Mehrzahl von Filtermedienpaketen, wobei je zwei Filtermedienpakete immer paarweise v-förmig angeordnet sind, einen sogenannten V-Zellen-Filter bzw. im Englischen auch als V-Bank-Filter bezeichnet. Die Filtermedienpakete werden von einem Gas zu dessen Reinigung von einer Rohgasseite des Filters zu einer Reingasseite des Filters durchströmt. Der Filter besitzt weiter einen Rahmen zur Aufnahme der Filtermedienpakete. Der Rahmen besitzt eine anströmseitige Kopfplatte, eine abströmseitige Fußplatte und zwei Seitenplatten. Erfindungsgemäß weisen die ggfs. segmentierten Seitenplatten eine strömungsoptimierte Formgebung zur Verbesserung der Durchströmung des Filters mit dem zu reinigenden Gas auf. Gegebenenfalls segmentiert meint, dass die Platten entweder einteilig oder aus mehreren Elementen zusammengesetzt sein können.

Dank der strömungsoptimierten Formgebung der Seitenplatten wird eine reingasseitige Reduzierung der Verwirbelung und damit auch ein geringerer Strömungswiderstand von austretendem Gas erreicht.

**In** erfindungsgemäßer Ausgestaltung des Kassettenfilter werden die *Seitenplatten* durch aneinander angereihte trapezförmige Seitenflächen ausgebildet wobei einem jedem v-förmigen Paar von Filtermedienpakten eine trapezförmige Seitenfläche einer jeweiligen Seitenplatte zugeordnet ist, insbesondere eine gleichschenklig-symmetrische trapezförmige Seitenfläche. Erfindungsgemäß bestehen so zwischen Schenkeln von aneinander angrenzenden trapezförmigen Seitenflächen v-förmige Zwischenräume, welche nicht geschlossen sind und annähernd bis zur Kopfplatte reichen. In anderen Worten: die Zwischenräume weisen die Form eines insbesondere gleichschenkligen Dreiecks auf, dessen Spitze zur Kopfplatte zeigt. Dadurch wird in vorteilhafter Weise ermöglicht, dass das gereinigte Gas senkrecht zur Hauptdurchströmungsrichtung gut abgeleitet werden kann. Bei Anwendung des Filters in einer Filterwand können die Totbereiche zwischen den jeweiligen Filtern reduziert werden und das reingasseitige Querschnittspotential wird besser genutzt.

Erfindungsgemäß sind in mindestens einem der Zwischenräume zwischen Schenkeln von aneinander angrenzenden trapezförmigen Seitenflächen strebenförmige Luftleitelemente angeordnet, welche sich von dem Schenkel einer ersten trapezförmigen Seitenfläche zum Schenkel der nächsten trapezförmigen Seitenfläche erstrecken und die trapezförmigen Seitenflächen so miteinander verbinden. Schenkel meint hierbei die Schenkel der Trapezform. Die strebenförmigen Luftleitelemente dienen der Umleitung der Strömung, nämlich des gereinigten Gases senkrecht zur Hauptdurchströmungsrichtung. Hierdurch können in vorteilhafter Weise ungewünschte Verwirbelungen des Gases auf der Reingasseite des Filters reduziert werden. Die Seitenplatten sind somit mit einer strömungsoptimierten Formgebung versehen.

Erfindungsgemäß sind die Luftleitelemente in mindestens einer Ebene parallel zur Kopfplatte und Fußplatte angeordnet und damit auch parallel zu den Grundseiten der trapezförmigen Seitenflächen. Auch können Sie in der Ebene der jeweiligen Seitenplatte liegen. Erfindungsgemäß sind die Luftleitelemente in mindestens zwei parallelen Ebenen angeordnet, sodass es in jeweils einem Zwischenraum mindestens zwei Streben gibt, welche voneinander beabstandet sind.

In einer möglichen Ausführungsform können die Luftleitelemente ins Innere des Filters zwischen die Filtermedienpakete hineinragen. Dabei können die Luftleitelemente unterschiedlich weit hineinragen und dazu unterschiedliche Tiefen aufweisen. So kann beispielsweise die Tiefe der Luftleitelemente von der Seite der Kopfplatte zur Seite der Fußplatte hin zunehmen. In vorteilhafter Weise kann bei dieser Ausgestaltung gezielt Einfluss auf die Luftströmung durch den Filter und aus dem Filter heraus genommen werden.

In vorteilhafter Ausgestaltung können die Luftleitelemente Leitflächen mit unterschiedlicher Neigung aufweisen. Die Luftleitelemente sind dabei insbesondere relativ zu Ebenen parallel der Kopfplatte und Fußplatte geneigt, weisen also einen Neigungswinkel relativ zu den Ebenen auf. So kann beispielsweise die Neigung der Luftleitelemente von der Seite der Kopfplatte zur Seite der Fußplatte hin zunehmen.

In einer bevorzugten Ausführungsform des Filters sind die Luftleitelemente als Flügel ausgeformt, nämlich mit einem Querschnittsprofil in Form von einem Oval oder einer Tragfläche.

In drei unterschiedlichen Ausführungsvarianten können die Luftleitelemente in ihrer Ausrichtung selbsttätig, händisch oder aktuatorisch einstellbar, d.h. justierbar sein. Dadurch kann in vorteilhafter Weise eine Anpassung an die tatsächlich vorliegenden Strömungsverhältnisse erfolgen und z.B. eine Anpassung des Filters an unterschiedliche Anwendungen vorgenommen werden.

Auch möglich ist es, dass die Luftleitelemente jeweils aus mehreren Bauteilen erzeugt werden. So könnte beispielsweise ein in Höhe der Fußplatte liegendes Luftleitelement aus einer Halbschale der Seitenplatte und einer Halbschale der Fußplatte zusammengesetzt sein.

In einer besonders raffinierten Ausgestaltung können die Luftleitelemente als Zusatzbauteile ausgeführt sein, welche je nach Bedarf nachträglich in den fertig montierten Filter eingeclipst oder anderweitig daran befestigt werden können.

In Weiterbildung des Kassettenfilters weisen die Kopfplatte und die Fußplatte jeweils den Filtermedienpaketen zugeordnete plattenförmige Traversen auf, welche sich von einer Seitenplatte zur anderen Seitenplatte erstrecken. Dabei sind *Flanken der Traversen,* welche sich ebenfalls von einer Seitenplatte zur anderen erstrecken, von Kopfplatte und/oder Fußplatte, also in der Strömung gelegene Teilflächen der Traversen, bauchig ausgeführt. Bauchig ausgeführt meint hierbei, dass die Teilflächen eine konvexe Wölbung aufweisen. Dabei können entweder alle Flanken oder nur manche Flanken, z.B. nur die Flanken der Traversen der Kopfplatte oder nur die Flanken der Traversen der Fußplatte, bauchig ausgeführt sein. Die bauchige Ausführung unterscheidet sich von der eckig-kantigen Ausführung im Stand der Technik. Die Kopfplatte und/oder die Fußplatte sind also mit einer strömungsoptimierten Formgebung versehen. Durch die bauchige Ausführung gemäß der Erfindung wird in vorteilhafter Weise ein geringerer Strömungswiderstand des Filters erreicht.

In Versuchen wurde herausgefunden, dass die Durchströmung weiter optimiert werden kann, wenn je zwei zueinander orientierte Flanken von benachbarten Traversen eine Venturidüse ausbilden, wobei die Engstelle einer jeweiligen Venturidüse durch die bauchigen Flanken realisiert ist.

Die Erfindung betrifft auch eine Filterwand mit einer Mehrzahl von matrixartig in einer Filteraufnahme aufgenommenen Filtern, welche wie vorstehend beschrieben ausgeführt sind.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter beispielhafter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a und b: einen Filter in zwei Ansichten
- Fig. 2a und b: einen senkrechten Schnitt durch einen Filter und den Luftstrom entlang der strebenförmigen Luftleitelemente
- Fig. 3a und b: einen waagrechten Schnitt durch einen Filter und den Luftstrom entlang der Flanken von Traversen

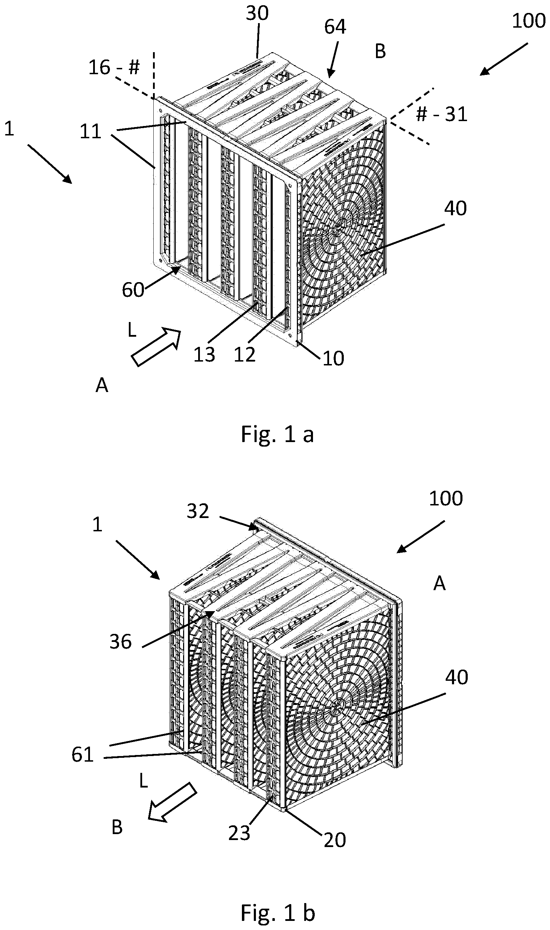

Fig. 1 a und b zeigen einen erfindungsgemäßen Kassettenfilter 100 in zwei perspektivischen Ansichten.

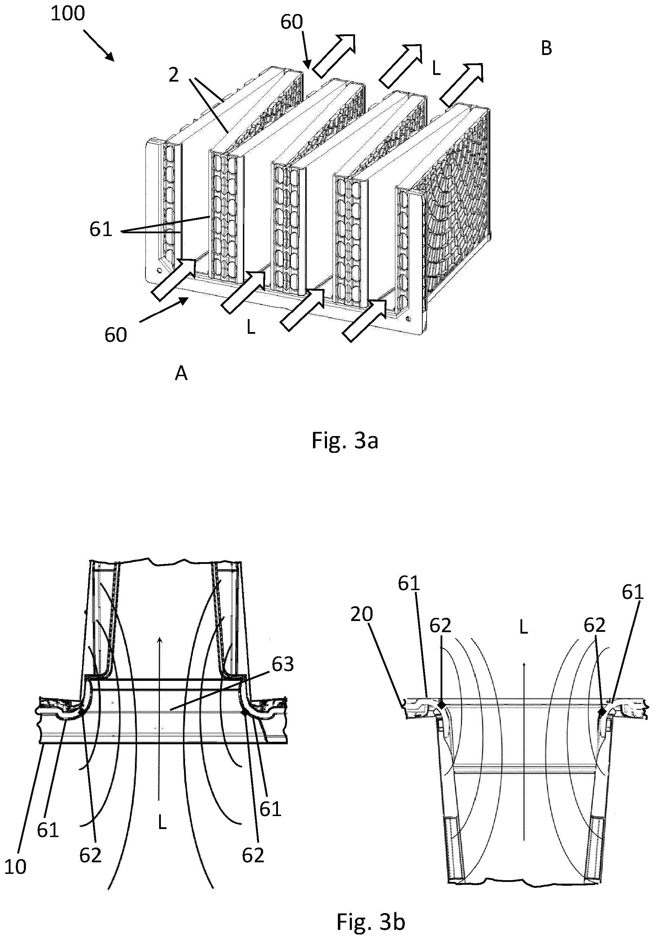

Der Kassettenfilter 100 besitzt acht Filtermedienpakete 2 (vgl. Fig. 3a) welche aus plissiertem Filtermedium gebildet sein können. Je zwei Filtermedienpakete 2 sind immer paarweise v-förmig angeordnet. Die Filtermedienpakete 2 werden von einem Gas zu dessen Reinigung von einer Rohgasseite A des Filters 100 zu einer Reingasseite B des Filters 100 in Durchströmungsrichtung L durchströmt.

Zur Aufnahme der Filtermedienpakete 2 ist ein Rahmen 1 vorgesehen. Der Rahmen 1 ist aus einer Kopfplatte 10, einer Fußplatte 20 und zwei Seitenplatten 30 aufgebaut. Die Kopfplatte 10 und die Fußplatte 20 und die Seitenplatten 30 weisen eine strömungsoptimierte Formgebung 60, 64 auf, welche anhand der weiteren Figuren näher erläutert wird.

Fig. 1a zeigt den Filter 100 von der Rohgasseite A und Fig. 1b von der Reingasseite B.

In Fig. 1a ist die Ebene 16 angedeutet, in welcher sich der Kopfrahmen 11 der Kopfplatte 10 befindet und die Ebene 31, in welcher sich die (im Bild oben liegende) Seitenplatte 30 befindet. Aus Fig. 1b ergibt sich, dass die Seitenplatten 30 in dem Bereich, in dem sie mit der Kopfplatte 10 verbunden sind, einen Absatz 32 aufweisen, welcher auch der einfacheren Aufnahme in einer Filterwand dienen kann (nicht dargestellt).

Je ein Schutzgitter 40 ist reingasseitig (A) an einem jeweiligen Filtermedienpaket 2 angeordnet. Durch die Schutzgitter 40 wird das Filtermedium der Filtermedienpakete 2 in ihrer Position gehalten, vor Beeinträchtigung geschützt und nachfolgende Anlagen vor Beschädigung bewahrt. In der dargestellten Ausführungsform ist ein jeweiliges Schutzgitter 40 einteilig als Spritzgussteil ausgebildet und an seinem umlaufenden Rand im Bereich einer Randstrebe stoffschlüssig mit dem Rahmen 1 verbunden, z.B. vergossen.

Die Kopfplatte 10 besitzt zwei Einzeltraversen 12, welche einem Filtermedienpaket 2 zugeordnet sind und drei Doppeltraversen 13, welche zwei nebeneinander angeordneten Filtermedienpaketen 2 zugeordnet sind. Die Fußplatte 20 besitzt vier Doppeltraversen 23, welche je einem Paar von Filtermedienpakten 2 zugeordnet sind.

Die Seitenplatten 30 werden durch aneinander angereihte trapezförmige Seitenflächen 36 ausgebildet, wobei eine jeweilige trapezförmige Seitenfläche 36 je einem Paar von v-förmig angeordneten Filtermedienpakten 2 zugeordnet ist.

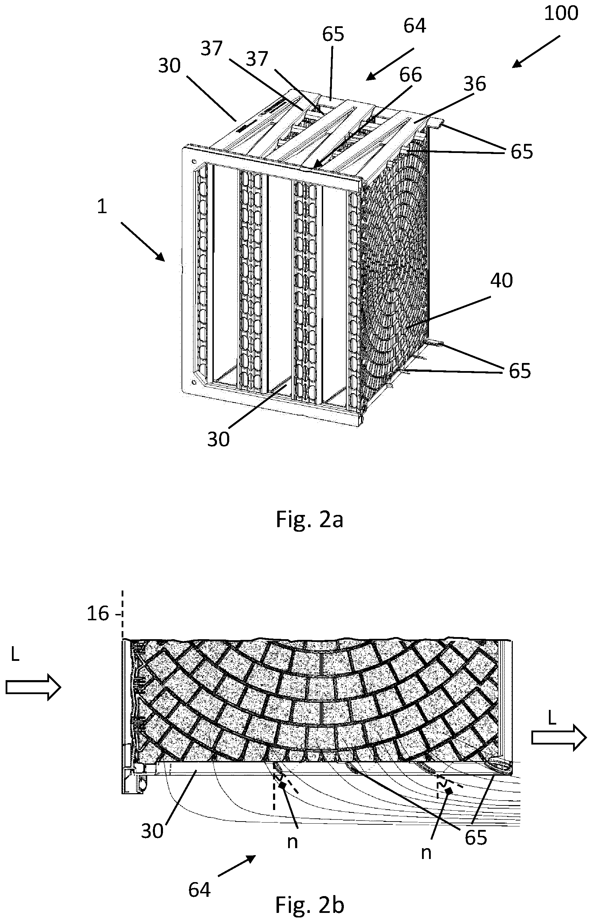

Die strömungsoptimierte Formgebung 64 der Seitenplatten 30 wird anhand der Figuren 2a und 2b näher erläutert.

Die strömungsoptimierte Formgebung 60 der Kopfplatte 10 bzw. der Fußplatte 20 wird anhand der Figuren 3a und 3b näher erläutert.

Fig. 2a zeigt einen senkrechten Schnitt durch einen Filter 100 und Fig. 2 b zeigt den Luftstrom L entlang der strebenförmigen Luftleitelemente 65.

Die Seitenplatten 30 werden durch aneinander angereihte trapezförmige Seitenflächen 36 ausgebildet, wobei in Fig. 2a noch drei zu erkennen sind. Zwischen Schenkeln 37 von aneinander angrenzenden trapezförmigen Seitenflächen bestehen v-förmige Zwischenräume 66, welche nicht geschlossen sind und bis zur Kopfplatte 10 reichen und die Form eines spitzen, gleichschenkligen Dreiecks aufweisen, dessen Spitze auf dem Niveau der Kopfplatte 10 liegt. Zur Verdeutlichung ist die Pfeilspitze der Linie des Bezugszeichen 66 auf die Position der Spitze des Dreiecks gerichtet.

In den Zwischenräumen zwischen Schenkeln 37 von aneinander angrenzenden trapezförmigen Seitenflächen 36 sind strebenförmige Luftleitelemente 65 angeordnet, nämlich in der Ebene der Seitenplatte 31 und in mehreren Ebenen parallel zur Ebene der Kopfplatte 16 (und damit auch zur Fußplatte 20).

Die Luftleitelemente 65 sind in flügelform ausgestaltet und besitzen Leitflächen mit unterschiedlichem Neigungswinkel n, wobei die Neigungswinkel n in Fig. 2b relativ zu einer jeweiligen Ebene parallel der Ebene 16 des Kopfrahmens angegeben sind.

Auch können die Luftleitelemente 65 in ihrer Ausrichtung einstellbar sein (nicht dargestellt).

### Fig. 3a zeigt einen waagrechten Schnitt durch einen Filter 100.

Fig. 3b zeigt den Luftstrom L entlang der Flanken 61 von Traversen 13, 23 mit Hilfe von Strömungslinien.

Die Flanken 61 der Traversen 12, 13, 23 von Kopfplatte 10 (links) und Fußplatte 20 (rechts) sind bauchig ausgeführt und besitzen eine konvexe Wölbung 62, welche den Luftwiderstand reduziert und die Durchströmung optimiert.

Je zwei Flanken 61 bilden dabei eine Venturidüse aus, wobei die Engstelle der Venturidüse zwischen den Wölbungen 62 liegt.

## Patentansprüche

1. Kassettenfilter (100) mit einer Mehrzahl von Filtermedienpaketen (2), wobei je zwei Filtermedienpakete (2) v-förmig angeordnet sind und mit einem Rahmen (1) zur Aufnahme der Filtermedienpakete (2), wobei der Rahmen (1) eine anströmseitige Kopfplatte (10), eine abströmseitige Fußplatte (20) und zwei Seitenplatten (30) besitzt, wobei die Seitenplatten (30) eine strömungsoptimierte Formgebung (60, 64) aufweisen, wobei die Seitenplatten (30) durch aneinander angereihte trapezförmige Seitenflächen (36) ausgebildet werden,
**dadurch gekennzeichnet, dass**
in mindestens einem der Zwischenräume zwischen Schenkeln (37) von aneinander angrenzenden trapezförmigen Seitenflächen (36) strebenförmige Luftleitelemente (65) angeordnet sind in mindestens zwei parallelen Ebenen parallel zur Kopfplatte (16) und Fußplatte angeordnet.

2. Kassettenfilter nach Anspruch 1, **dadurch gekennzeichnet, dass** die Luftleitelemente (65) Leitflächen mit unterschiedlicher Neigung (n) aufweisen.

3. Kassettenfilter nach einem der vorangehenden Ansprüche, **dadurch gekennzeichnet, dass**
die Luftleitelemente (65) als Flügel ausgeformt sind.

4. Kassettenfilter nach einem der vorangehenden Ansprüche, **dadurch gekennzeichnet, dass**
die Luftleitelemente (65) in ihrer Ausrichtung einstellbar sind.

5. Kassettenfilter nach einem der vorangehenden Ansprüche, **dadurch gekennzeichnet, dass**
die Kopfplatte (10) und/oder die Fußplatte (20) eine strömungsoptimierte Formgebung (60, 64) und die Kopfplatte (10) und die Fußplatte (20) jeweils den Filtermedienpaketen (2) zugeordnete plattenförmige Traversen (12, 13, 23) aufweisen und
dass Flanken (61) der Traversen (12, 13, 23) von Kopfplatte (10) und/oder Fußplatte (20) bauchig ausgeführt sind.

6. Filterwand mit einer Mehrzahl von matrixartig in einer Filteraufnahme aufgenommenen Kassettenfiltern (100) nach einem der vorangehenden Ansprüche.

## Claims

1. Cassette filter (100) with a multiplicity of filter media packs (2), wherein in each case two filter media packs (2) are arranged in a v-shaped manner and with a frame (1) for receiving the filter media packs (2), wherein the frame (1) possesses an inflow-side head plate (10), an outflow-side foot plate (20) and two side plates (30), wherein the side plates (30) have a flow-optimized shaping (60, 64), wherein the side plates (30) are formed by trapezoidal lateral surfaces (36) arranged in rows, **characterized in that**,
in at least one of the cavities between limbs (37) of trapezoidal lateral surfaces (36) which adjoin one another, strut-shaped air guiding elements (65) are arranged in at least two parallel planes parallel to the head plate (16) and foot plate.

2. Cassette filter according to Claim 1, **characterized in that**
the air guiding elements (65) have guiding surfaces with a different inclination (n).

3. Cassette filter according to any one of the preceding claims, **characterized in that**
the air guiding elements (65) are formed as blades.

4. Cassette filter according to any one of the preceding claims, **characterized in that**
the air guiding elements (65) are adjustable in terms of their orientation.

5. Cassette filter according to any one of the preceding claims, **characterized in that**
the head plate (10) and/or the foot plate (20) have a flow-optimized shaping (60, 64) and the head plate (10) and the foot plate (20) have in each case plate-shaped cross members (12, 13, 23) assigned to the filter media packs (2) and
that flanks (61) of the cross members (12, 13, 23) of head plate (10) and/or foot plate (20) are embodied in a bulbous manner.

6. Filter wall with a multiplicity of cassette filters (100) received in a matrix-like manner in a filter receiver according to any one of the preceding claims.

## Revendications

1. Filtre à cassette (100) comprenant une pluralité de paquets de milieu filtrant (2), chaque ensemble de deux paquets de milieu filtrant (2) étant disposé en forme de V, et un cadre (1) destiné à recevoir les paquets de milieu filtrant (2), le cadre (1) comportant une plaque de tête côté entrée (10), une plaque de pied côté sortie (20) et deux plaques latérales (30), les plaques latérales (30) ayant une conformation (60, 64) optimisée en termes d'écoulement, les plaques latérales (30) étant formées par des surfaces latérales trapézoïdales (36) disposées en rangée,
**caractérisé en ce que**
des éléments de guidage d'air (65) en forme d'entretoise sont disposés dans au moins un des espaces intermédiaires entre des branches (37) de surfaces latérales trapézoïdales adjacentes (36) et sont disposés dans au moins deux plans parallèles à la plaque de tête (16) et à la plaque de pied.

2. Filtre à cassette selon la revendication 1, **caractérisé en ce que** les éléments de guidage d'air (65) comportent des surfaces de guidage présentant différentes inclinaisons (n).

3. Filtre cassette selon l'une des revendications précédentes, **caractérisé en ce que** les éléments de guidage d'air (65) sont conformés en ailes.

4. Filtre à cassette selon l'une des revendications précédentes, **caractérisé en ce que** les éléments de guidage d'air (65) peuvent être réglés quant à leur orientation.

5. Filtre à cassette selon l'une des revendications précédentes, **caractérisé en ce que**
la plaque de tête (10) et/ou la plaque de pied (20) ont une conformation (60, 64) optimisée en termes d'écoulement et la plaque de tête (10) et la plaque de pied (20) comportent chacune des traverses (12, 13, 23) en forme de plaque associée aux paquets de milieu filtrant (2) et
les flancs (61) des traverses (12, 13, 23) de la plaque de tête (10) et/ou de la plaque de pied (20) sont bombés.

6. Paroi filtrante comportant une pluralité de filtres à cassette (100) logés de manière matricielle dans un porte-filtre selon l'une des revendications précédentes.
